# EUROPÄISCHE PATENTSCHRIFT

(11) **EP 1 828 599 B1**
(45) Veröffentlichungstag und Bekanntmachung des Hinweises auf die Patenterteilung: **09.03.2011**
(21) Anmeldenummer: 05819346.7
(22) Anmeldetag: 13.12.2005
(51) Int. Cl.: F03D 11/00, G01W 1/00, B64D 15/20

(54) **ROTORBLATT FÜR EINE WINDENERGIEANLAGE**
ROTOR BLADE FOR A WIND POWER STATION
PALE DE ROTOR POUR EOLIENNE

(30) Priorität: 14.12.2004 DE 102004060449; 15.04.2005 DE 102005017716
(43) Veröffentlichungstag der Anmeldung: 05.09.2007
(73) Patentinhaber: Wobben, Aloys, 26607 Aurich (DE)
(72) Erfinder: Wobben, Aloys, 26607 Aurich (DE)
(74) Vertreter: Gültzow, Marc
(86) Internationale Anmeldenummer: PCT/EP2005/056726
(87) Internationale Veröffentlichungsnummer: WO 2006/063990

(56) Entgegenhaltungen:
- WO-A-02/053910
- DE-A1- 10 160 522
- DE-A1- 10 315 676
- DE-A1- 19 927 015
- DE-U1- 20 206 704

## Beschreibung

Die vorliegende Erfindung betrifft ein Rotorblatt für eine Windenergieanlage sowie eine Windenergieanlage mit einem entsprechenden Rotorblatt.

Bei Windenergieanlagen ist es insbesondere in der kalten Jahreszeit wünschenswert, eine Vereisung an den Rotorblättern festzustellen, um geeignete Maßnahmen zur Enteisung vorzunehmen. Eine Vereisung der Rotorblätter ist nicht erwünscht, da sich durch die Vereisung das Gewicht der Rotorblätter erhöht. Ferner können sich von dem Rotorblatt lösende Eisbrocken während des Betriebes einer Windenergieanlage zu gefährlichen Geschossen werden und Personen- oder Sachschäden verursachen. Des Weiteren können sich von dem Rotorblatt lösende Eisbrocken zu einer Unwucht der Rotorblätter führen, was schließlich dazu führen kann, dass die Anlage abgeschaltet werden muss. Ein Abschalten der Anlage ist jedoch aus wirtschaftlichen Gründen unerwünscht.

Um dies zu verhindern, weisen viele Windenergieanlagen eine Heizvorrichtung für die Rotorblätter auf, um einen Eisansatz zu verhindern. Ferner können die Windenergieanlagen auch bei einem entsprechenden Eisansatz abgeschaltet werden. Hierbei muss jedoch ein Eisansatz sicher erkannt werden.

Bei bekannten Sensorsystemen zur Erfassung eines Eisansatzes an einem Rotorblatt einer Windenergieanlage sind die entsprechenden Sensoren an der Gondel der Anlage installiert. Somit kann jedoch keine direkte Vergleichbarkeit der Strömungs- und Vereisungsbedingungen erreicht werden, da an dem Rotorblatt andere Strömungsbedingungen herrschen.

Aus der DE 202 06 704 ist ein Eissensor für eine Windenergieanlage bekannt. Der Eissensor wird in der Nähe der Rotorblattspitzen angeordnet. Die ermittelten Daten werden unter Berücksichtigung der meteorologischen Rahmenbedingungen verarbeitet, um entsprechende Maßnahmen ergreifen zu können.

Als Stand der Technik wird an dieser Stelle noch allgemein auf folgende Druckschriften hingewiesen: DE 199 27 015 A1, DE 103 15 676 A1, DE 101 60 522 A1 und DE 200 21 970 U1.

Es ist somit Aufgabe der vorliegenden Erfindung, ein Rotorblatt für eine Windenergieanlage vorzusehen, welches zwischen Ablagerungen wie Schmutz und einen Eisansatz unterscheiden kann.

Diese Aufgabe wird durch ein Rotorblatt gemäß Anspruch 1 sowie durch eine Windenergieanlage gemäß Anspruch 11 gelöst.

Somit wird ein Rotorblatt für eine Windenergieanlage mit einer Rotorblattnase vorgesehen. Im Bereich der Rotorblattnase wird eine Ablagerungs-Sensorvorrichtung angeordnet. Diese Ablagerungs-Sensorvorrichtung weist einen Sender zum drahtlosen Senden von Signalen über eine Übertragungsstrecke und einen Empfänger zum Empfangen der drahtlos über die Übertragungsstrecke übermittelten Signale auf. Anhand der über die Übertragungsstrecke übermittelten Signale können Ablagerungen auf der Oberfläche im Bereich der Übertragungsstrecke erfasst werden.

Somit wird ein Rotorblatt mit einer Ablagerungs-Sensorvorrichtung vorgesehen, welches in der Lage ist, Ablagerungen auf der Oberfläche des Rotorblattes schnell und sicher zu erfassen.

Gemäß einem Aspekt der vorliegenden Erfindung weist das Rotorblatt oder die Windenergieanlage eine Vergleichseinrichtung auf, welche dazu dient, die von dem Sender gesendeten und von dem Empfänger empfangenen Signale zu vergleichen, um Änderungen festzustellen. Durch das Feststellen der Veränderungen der übertragenen Signale kann unmittelbar festgestellt werden, inwieweit sich das Übertragungsverhalten der Übertragungsstrecke verändert, so dass unmittelbar Ablagerungen erfasst werden können.

Gemäß einem weiteren Aspekt der vorliegenden Erfindung weist die Vergleichseinrichtung einen Speicher zum Speichern der erfassten Veränderungen der empfangenen Signale auf, so dass eine Datenbank erstellt wird. Anhand der Datenbank können Rückschlüsse auf die Häufigkeit und die Bedingungen beim Auftreten von Ablagerungen ermittelt werden.

Gemäß einem bevorzugten Aspekt der vorliegenden Erfindung stellt die Ablagerungs-Sensorvorrichtung eine optische Sensorvorrichtung dar. Die Erfassung von Ablagerungen erfolgt somit basierend auf optischen Signalen, so dass es nicht zu einer Wechselwirkung mit den elektronischen und elektrischen Komponenten der Windenergieanlage kommt.

Gemäß einem weiteren Aspekt der vorliegenden Erfindung weist der Sender eine Auskopplungslinse und der Empfänger eine Einkopplungslinse auf. Somit kann die Effektivität der Übertragung der optischen Signale verbessert werden.

Gemäß einem weiteren bevorzugten Aspekt der vorliegenden Erfindung sind sowohl der Sender als auch der Empfänger jeweils über Lichtwellenleiter mit der Vergleichseinrichtung verbunden. Somit können elektrische Leitungen in dem Rotorblatt vermieden werden, um somit den Blitzschutz weiter zu verbessern.

Weitere Aspekte der vorliegenden Erfindung sind Gegenstand der Unteransprüche.

Nachfolgend werden die Erfindung sowie deren Ausführungsbeispiele unter Bezugnahme auf die Zeichnungen näher erläutert.
- Figur 1: zeigt eine Vorderansicht einer Windenergieanlage gemäß dem ersten Ausführungsbeispiel,
- Figur 2: zeigt eine Schnittansicht eines Abschnittes eines Rotorblattes der Windenergieanlage von Figur 1,
- Figur 3: zeigt eine Draufsicht eines Abschnittes eines Rotorblattes von der Windenergieanlage von Figur 1, und

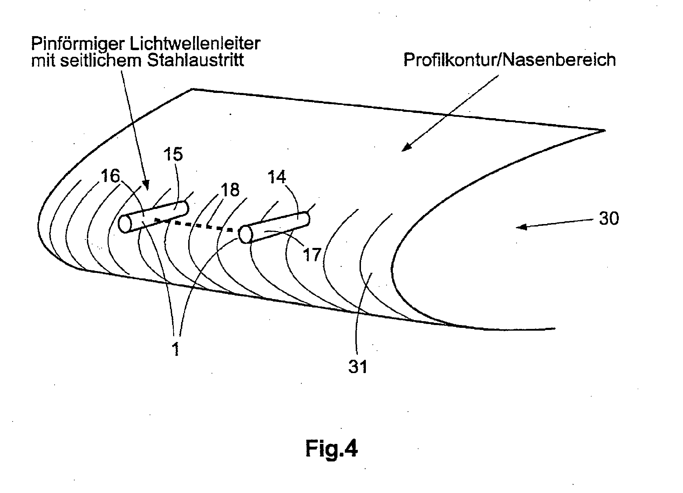

- Figur 4: zeigt eine Draufsicht auf einen Abschnitt eines Rotorblattes ei- ner Windenergieanlage gemäß einem zweiten Ausführungsbei- spiel.

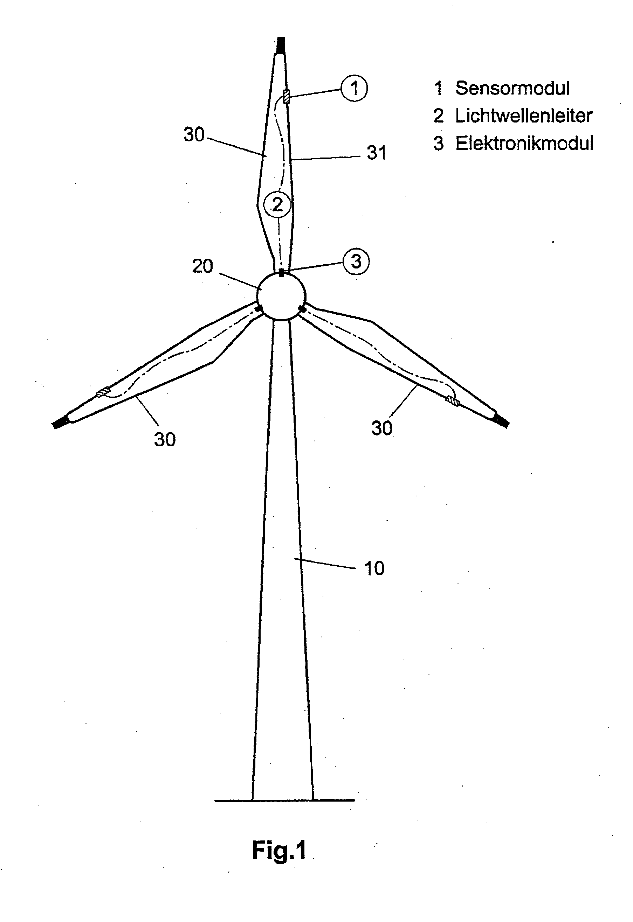

Fig. 1 zeigt eine Vorderansicht einer Windenergieanlage gemäß einem ersten Ausführungsbeispiel. Die Windenergieanlage weist dabei einen Turm 10, eine Gondel 20 sowie drei Rotorblätter 30 auf. An jedem der Rotorblätter ist ein Ablagerungssensor 1 angeordnet. Vorzugsweise ist der Ablagerungssensor 1 an der Rotorblattnase angeordnet. Die Ablagerungssensoren 1 sind jeweils über Lichtwellenleiter 2 mit einer Vergleichseinrichtung 3 verbunden.

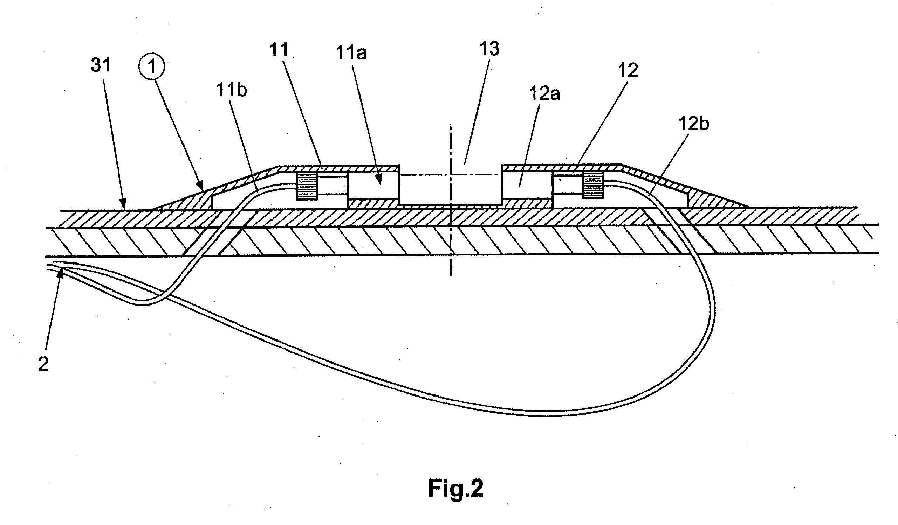

Fig. 2 zeigt eine Schnittansicht eines Abschnittes eines Rotorblattes 30 der Windenergieanlage von Fig. 1. Hierbei ist insbesondere der Abschnitt des Rotorblattes im Bereich des Ablagerungssensors 1 gezeigt. Der Ablagerungssensor ist im Bereich der Rotorblattnase 31 des Rotorblattes 30 angebracht. Der Ablagerungssensor 1 besteht im Wesentlichen aus einem optischen Sender 11 und einem optischen Empfänger 12. Der optische Sender 11 ist mit einer Auskopplungslinse 11a und der optische Empfänger 12 ist mit einer Einkopplungslinse 12a versehen. Der optische Sender 11 und der optische Empfänger 12 sind jeweils über Lichtwellenleiter 11 b, 12b, 2 mit der Vergleichseinrichtung 3 verbunden. Zwischen der Auskopplungslinse 11a und der Einkopplungslinse 12a ist eine optische Übertragungsstrecke 13 vorgesehen. Diese optische Übertragungsstrecke verläuft im Wesentlichen parallel zur Oberfläche der Rotorblattnase 31.

Somit wird der Ablagerungssensor 1 direkt an dem Rotorblatt der Windenergieanlage angebracht, so dass die entsprechenden Ablagerungen wie zum Beispiel die Verschmutzung und Vereisung direkt am Rotorblatt ermittelt werden können. Vorzugsweise werden die Ablagerungssensoren im äußeren Drittel des Rotorblattes (siehe Fig. 1) angeordnet, da hier eine höhere Sicherheit der Erkennung von Ablagerungen wie beispielsweise Verschmutzungen und Vereisungen besteht. Zusätzlich dazu können weitere Ablagerungssensoren 1 an weiteren Stellen an dem Rotorblatt angeordnet werden, so dass ein mehrfach redundantes System erhalten werden kann.

Da elektrische Leitungen in einem Rotorblatt einer Windenergieanlage nicht wünschenswert hinsichtlich des Blitzschutzes sind, wird das erfindungsgemäße Sensorsystem im Wesentlichen in zwei Teile, nämlich den tatsächlichen Sensor und die Auswerteeinheit, eingeteilt. Vorzugsweise wird dabei die Vergleichseinheit in der Blattwurzel des Rotorblattes oder an einem drehenden Teil des Maschinenhauses angeordnet. Der optische Sensor und Empfänger wird hingegen am Rotorblatt selbst angeordnet. Die Übertragung des Lichtsignals von der Vergleichseinrichtung zu dem optischen Empfänger erfolgt vorzugsweise über Lichtwellenleiter, so dass weitere elektrische Leitungen in dem Rotorblatt vermieden werden können. Alternativ dazu kann die Vergleichseinrichtung auch direkt in oder an dem Ablagerungssensor 1 angeordnet werden, soweit ein geeigneter Blitzschutz vorgesehen wird.

Vorzugsweise werden die Verbindungen zwischen dem optischen Sender 11 und dem optischen Empfänger 12 und den jeweiligen Lichtwellenleitern 11b, 12b, 2 mittels Steckkontakten oder mittels einer Verschraubung gewährleistet. Somit kann der Ablagerungssensor 1 auf eine einfache Art und Weise ausgetauscht werden, ohne dass dabei das gesamte Rotorblatt ausgetauscht werden muss.

Wie in Fig. 2 gezeigt, weist der Ablagerungssensor 1 vorzugsweise eine Auskoppellinse 11a und eine Einkoppellinse 12 a auf, um eine geringe Dämpfung des Lichtstrahls zwischen dem optischen Sender 11 und dem optischen Empfänger 12 zu ermöglichen. Sobald sich Ablagerungen in der optischen Übertragungsstrecke 13 absetzen, wird das Übertragungsverhalten dieser Übertragungsstrecke 13 verändert, was durch die Vergleichseinrichtung 3 erfasst werden kann.

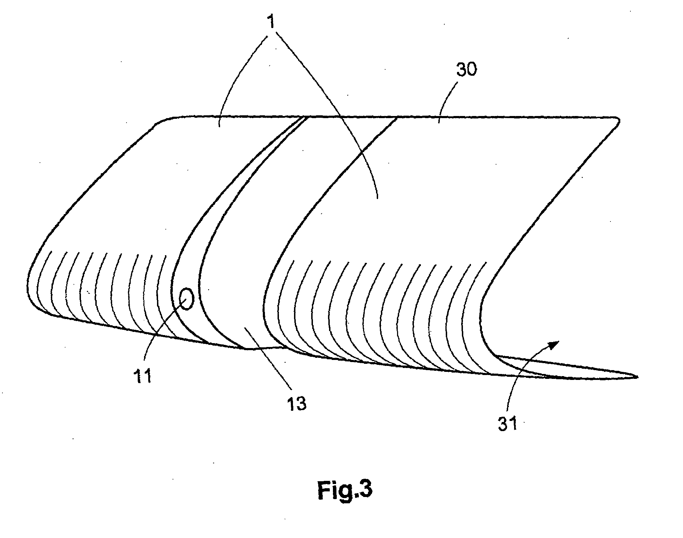

Fig. 3 zeigt eine Draufsicht auf einen Abschnitt des Rotorblattes von Fig. 1 im Bereich des Ablagerungssensors 1. Hierbei ist der Ablagerungssensor 1 fest mit der Rotorblattnase 31 des Rotorblattes 30 verbunden. Dies kann durch Verschrauben oder Verkleben erfolgen. Hierbei ist die optische Übertragungsstrecke 13 im Wesentlichen parallel zur Rotorblattnase in Rotorblattlängsrichtung ausgerichtet. Vorzugsweise sollte die Position des optischen Senders 11 und des optischen Empfängers 12 im Bereich des Profilstaupunktes angeordnet sein, da dies die wahrscheinlichste Stelle für eine beginnende Ablagerung darstellt. Die in Fig. 3 gezeigte äußere Formgebung des Ablagerungssensors 1 gewährleistet eine verlustarme Umströmung des Ablagerungssensors 1. Ferner trägt sie im Bereich des Luftspaltes, d. h. der optischen Übertragungsstrecke 13, durch die kanalisierende Wirkung auf die Umströmung der Rotorblattnase dazu bei, Verschmutzungen an dem optischen Sender und Empfänger zu vermeiden. Aufgrund der besonderen Formgebung des Ablagerungssensors sind die Richtungsvektoren der Strömung nie direkt in Richtung des optischen Senders 11 und des optischen Empfängers 12 bzw. deren Ein- oder Austrittsstellen gerichtet.

Vielmehr sind die Richtungsvektoren der Strömung im Wesentlichen senkrecht dazu angeordnet. Die durch die optische Übertragungsstrecke 13 entstehende Einkerbung des Ablagerungssensors 1 in der Nasenkontur sollte vorzugsweise breit genug sein, um die Entstehungsmechanismen bei der Entstehung beispielsweise von Eis nicht merklich zu verändern und schmal genug, um eine möglichst geringe Dämpfung oder Beeinflussung des Lichtstrahles in der optischen Übertragungsstrecke 13 durch Verschmutzung oder Verformung des Blattes zu gewährleisten.

Um den Einfluss von dem einfallenden Sonnenlicht auf den optischen Empfänger 12 zu verringern, wird der über die Übertragungsstrecke 13 übermittelte Lichtstrahl vorzugsweise gepulst. Durch eine weitere Miniaturisierung des Ablagerungssensors 1 kann bei einer entsprechenden Anordnung eine rastergesteuerte Eisdickenmessung realisiert werden.

Fig. 3 zeigt eine Draufsicht auf einen Abschnitt einer Rotorblattnase eines Rotorblattes für eine Windenergieanlage gemäß einem zweiten Ausführungsbeispiel. Hierbei beruht der Ablagerungssensor 1 gemäß dem zweiten Ausführungsbeispiel auf dem gleichen Funktionsprinzip wie der Ablagerungssensor 1 gemäß dem ersten Ausführungsbeispiel, d. h. es wird ein optischer Sender 16, ein optischer Empfänger 17 sowie eine optische Übertragungsstrecke 18 zwischen dem Sender 16 und dem Empfänger 17 vorgesehen. Während gemäß dem ersten Ausführungsbeispiel der Abstandssensor im Wesentlichen an die Kontur der Rotorblattnase angepasst ist, ist der Ablagerungssensor gemäß dem zweiten Ausführungsbeispiel durch nadelförmige bzw. pinförmige aus der Profilnase bzw. der Rotorblattnase austretende Lichtwellenleiter implementiert.

Gemäß dem zweiten Ausführungsbeispiel wird der Ablagerungssensor 1 durch zwei aus der Oberfläche des Rotorblattes hinausragende pinförmige Lichtwellenleiter 14, 15 mit einem seitlichen Strahlaustritt realisiert. Durch die Umlenkung des Lichtstrahles um 90° mittels entsprechender Linsen bzw. Prismen lassen sich Lichtwellenleiter im Inneren des Rotorblattes bis an die Unterseite der Linsen 14, 15 führen. Der Lichtstrahl wird dann an die Linse angekoppelt und von der Linse bzw. dem Prisma um 90° umgelenkt, so dass sich der Lichtstrahl im Wesentlichen parallel zur Oberfläche des Rotorblattes über die optische Übertragungsstrecke 18 von dem optischen Sender 16 zum optischen Empfänger 17 erstrecken kann. Der optische Empfänger 17 weist ebenfalls eine Linse bzw. ein Prisma auf, um den Lichtstrahl um 90° umzulenken und in den rückführenden Lichtwellenleiter einzukoppeln.

Im Wesentlichen entspricht der prinzipielle Aufbau des Ablagerungssensors 1 gemäß dem zweiten Ausführungsbeispiel dem gemäß dem ersten Ausführungsbeispiel. Gemäß dem zweiten Ausführungsbeispiel ist der Aufbau jedoch wesentlich einfacher ausgestaltet. Ferner ist eine Veränderung des Rotorblattes an seiner Nasenkontur nur noch in einem sehr geringen Umfang notwendig. Vorzugsweise werden der optische Sender 16 und der optische Empfänger 17 mit den entsprechenden Linsen zur 90°-Umlenkung verschraubbar oder steckbar ausgestaltet, so dass sie ohne Weiteres bei Bedarf ausgetauscht werden können.

Vorzugsweise sind der optische Sender 16 und der optische Empfänger 17 nicht genau im vordersten Punkt der Blattnase angeordnet, sondern geringfügig dazu versetzt. Mit anderen Worten: der Ablagerungssensor 1 ist nicht im vordersten Bereich der Blattnase, d. h. der Nasenlinie, angeordnet. Der Ablagerungssensor 1 kann somit im Bereich der Blattnase angeordnet sein.

Vorzugsweise sollte der Ablagerungssensor gemäß dem ersten oder zweiten Ausführungsbeispiel im Bereich der Rotorblattnase im Bereich des Staupunktes angeordnet sein. Der Staupunkt stellt dabei den Punkt dar, an dem die Luftströmung auf das Blatt auftritt und sich dann in eine erste Strömung entlang der Saugseite und eine zweite Strömung entlang der Druckseite aufteilt. Im Bereich dieses Staupunktes wird ein Eisansatz beginnen und sich dann nach einem Zufallsmuster weiter aufbauen. Eine präzise Vorhersage über die Position des Staupunktes kann nicht getroffen werden, da dieser auch abhängig von dem Anstellwinkel des Rotorblattes ist.

Die Höhe des optischen Senders 16 und des optischen Empfängers 17 bzw. deren Linsen kann über der Rotorblattoberfläche einstellbar ausgestaltet werden. Dies kann dadurch erreicht werden, dass der optische Sender 16 und der optische Empfänger 17 mehr oder weniger weit aus der Rotorblattoberfläche herausragen. Der Abstand zwischen dem optischen Sender 16 und dem optischen Empfänger 17 kann zwischen 10 bis 100 mm, vorzugsweise 20 bis 50 mm, betragen. Der Abstand zwischen dem Lichtstrahl zwischen dem optischen Sender 16 und dem optischen Empfänger 17 und der Rotorblattoberfläche (d.h. der Abstand des Lichtstrahls von der Rotorblattoberfläche) beträgt zwischen 2 bis 10 mm und vorzugsweise 5 bis 6 mm. Der Abstand zwischen der Oberfläche des Rotorblattes und dem Lichtstrahl zwischen dem optischen Sender und Empfänger bestimmt die detektierbare Eisdicke. Eine Eisdicke unter 2 mm kann dabei unbeachtet bleiben, während eine dickere Eisschicht als vorzugsweise 5 - 6 mm zu erheblichen Problemen führen kann.

Um ein vereinfachtes Austauschen der Linse zu ermöglichen, können Buchsen in dem Rotorblatt vorgesehen werden, in welche eine Linse, d. h. ein optischer Sender oder ein optischer Empfänger, eingesetzt werden kann. Vorzugsweise ist zwischen der Buchse und den optischen Sendern und optischen Empfängern eine formschlüssige Verbindung wie beispielsweise ein Bajonettverschluss vorgesehen. Alternativ bzw. zusätzlich dazu können die Buchsen und der optische Sender und der optische Empfänger miteinander verschraubt werden. Dies ist insbesondere dahingehend vorteilhaft, als dass die optischen Empfänger und optischen Sender stabiler gegen einen Eisansatz geschützt sind und nicht während eines Abtauvorganges vom Blatt herausgerissen werden und mit dem Eis nach unten stürzen.

Gemäß einem weiteren Ausführungsbeispiel basierend auf dem ersten oder zweiten Ausführungsbeispiel kann die Vergleichseinrichtung 3 einen Speicher aufweisen, in dem charakteristische Ablagerungen gespeichert werden, so dass diese bei Betrieb mit den tatsächlich erfassten Werten verglichen werden können. Somit kann beispielsweise unterschieden werden, ob es sich bei den Ablagerungen lediglich um eine Verschmutzung durch Vogeldreck oder Staub handelt oder ob es sich um eine ansetzende Eisbildung handelt. Zusätzlich dazu kann die Vergleichseinrichtung 3 weitere Daten aus der Umgebung der Windenergieanlage verarbeiten. Diese Daten können beispielsweise Temperaturdaten darstellen, so dass beispielsweise der Ablagerungssensor 1 ab einer Temperatur von 3°C abgeschaltet werden kann, da ab derartigen Temperaturen nicht mit einem Eisansatz zu rechnen ist.

Ferner kann die Vergleichseinrichtung einen Datenbankspeicher aufweisen, in welchem die erfassten Veränderungen gespeichert und ggf. ausgewertet werden können, um beispielsweise ein Vereisungsmuster feststellen zu können, um ggf. eine entsprechende Früherkennung zu ermöglichen.

Die Vergleichseinrichtung kann auch außerhalb des Rotorblattes, beispielsweise im Bereich der Nabe, angeordnet sein, was den Vorteil hat, dass keine elektrischen Leitungen in dem Rotorblatt verlegt werden müssen. In einem derartigen Fall weist das Rotorblatt im Übergangsbereich zur Nabe eine(n) entsprechende Verbindung bzw. Anschluss auf, um den Ablagerungssensor mit der Vergleichseinrichtung zu koppeln. Somit kann erreicht werden, dass lediglich Lichtwellenleiter in dem Rotorblatt verlegt werden müssen, was sich insbesondere hinsichtlich des Blitzschutzes als vorteilhaft erweist.

## Patentansprüche

1. Rotorblatt (30) für eine Windenergieanlage, mit
einer Rotorblattnase (31),
einer im Bereich der Rotorblattnase (31) angeordneten Ablagerungs-Sensorvorrichtung (1, 11, 12, 13) mit einem Sender (11) zum drahtlosen Senden von Signalen über eine Übertragungsstrecke (13) und einem Empfänger (12) zum Empfangen der drahtlos über die Übertragungsstrecke (13) übermittelten Signale,
wobei anhand der über die Übertragungsstrecke (13) übermittelten Signale diejenigen Ablagerungen auf der Oberfläche des Rotorblattes (30) erfasst werden, welche sich im direkten Bereich der Übertragungsstrecke (13) des drahtlos übertragenen Signals befinden,
wobei die Übertragungsstrecke (13) zwischen dem Sender (11) und dem Empfänger (12) im Wesentlichen parallel zu der Rotorblattnase (31) verläuft.

2. Rotorblatt (30) nach Anspruch 1, mit
einer Vergleichseinrichtung (3) zum Vergleichen der von dem Sender (11) gesendeten und von dem Empfänger (12) empfangenen Signale, um Veränderungen in den empfangenen Signale zu erfassen.

3. Rotorblatt (30) nach Anspruch 1, mit
einem Anschluss zum Koppeln einer externen Vergleichseinrichtung mit der Ablagerungs-Sensorvorrichtung (1, 11, 12, 13), wobei die von dem Sender (11) gesendeten und von dem Empfänger (12) empfangenen Signale in der Vergleichseinrichtung verglichen werden, um Veränderungen in den empfangenen Signalen zu erfassen.

4. Rotorblatt (30) nach Anspruch 1, 2 oder 3, wobei die Ablagerungs-Sensorvorrichtung zur kontinuierlichen Erfassung oder zur Erfassung in vorgegebenen zeitlichen Abständen von Ablagerungen ausgestaltet ist.

5. Rotorblatt (30) nach Anspruch 2, 3 oder 4, wobei
die Vergleichseinrichtung (3) einen Speicher zum Speichern der erfassten Veränderungen aufweist, um eine Datenbank zu erstellen.

6. Rotorblatt (30) nach einem der vorherigen Ansprüchen, wobei
die Ablagerungs-Sensorvorrichtung (1, 11, 12, 13) eine optische Sensorvorrichtung darstellt.

7. Rotorblatt (30) nach Anspruch 6, wobei
der Sender (11) eine Auskopplungslinse (11 a) und der Empfänger (12) eine Einkopplungslinse (12a) aufweist.

8. Rotorblatt (30) nach einem der vorherigen Ansprüchen, wobei
der Sender (11) und der Empfänger (12) jeweils über Lichtwellenleiter (11b, 12b) mit der Vergleichseinrichtung (3) verbunden sind.

9. Rotorblatt (30) nach einem der vorherigen Ansprüche, wobei
ein Übergang jeweils zwischen Sender (11) und der Oberfläche des Rotorblattes (30) sowie zwischen Empfänger (12) und der Oberfläche des Rotorblattes (30) scharfkantig erfolgt.

10. Rotorblatt (30) nach einem der vorherigen Ansprüche, wobei
der Sender (11) und der Empfänger (12) pinförmig aus der Oberfläche des Rotorblattes herausragen.

11. Windenergieanlage mit mindestens einem Rotorblatt nach einem der Ansprüche 1 bis 10.

## Claims

1. A rotor blade (30) for a wind power installation, comprising
a rotor blade leading edge (31),
a deposit sensor device (1, 11, 12, 13) arranged in the region of the rotor blade leading edge (31) and having a transmitter (11) for wirelessly transmitting signals by way of a transmission link (13) and a receiver (12) for receiving the signals wirelessly transmitted by way of the transmission link (13),
wherein those deposits on the surface of the rotor blade (30) that are in the direct region of the transmission link (13) of the wirelessly transmitted signal are detected on the basis of the signals transmitted by way of the transmission link (13),
wherein the transmission link (13) between the transmitter (11) and the receiver (12) extends substantially parallel to the rotor blade leading edge (31).

2. A rotor blade (30) according to claim 1, comprising
a comparison device (3) for comparing the signals transmitted by the transmitter (11) and received by the receiver (12) in order to detect changes in the received signals.

3. A rotor blade (30) according to claim 1, comprising
a connection for coupling an external comparison device to the deposit sensor device (1, 11, 12, 13), wherein the signals transmitted by the transmitter (11) and received by the receiver (12) are compared in the comparison device in order to detect changes in the received signals.

4. A rotor blade (30) according to claim 1, 2 or 3, wherein the deposit sensor device is configured for continuous detection of deposits or for detection of deposits at predetermined time intervals.

5. A rotor blade (30) according to claim 2, 3 or 4, wherein
the comparison device (3) has a storage device for storing the detected changes in order to create a database.

6. A rotor blade (30) according to any one of the preceding claims, wherein
the deposit sensor device (1, 11, 12, 13) represents an optical sensor device.

7. A rotor blade (30) according to claim 6, wherein
the transmitter (11) has a coupling-out lens (11a) and the receiver (12) has a coupling-in lens (12a).

8. A rotor blade (30) according to any one of the preceding claims, wherein
the transmitter (11) and the receiver (12) are each connected to the comparison device (3) by way of optical waveguides (11b, 12b).

9. A rotor blade (30) according to any one of the preceding claims, wherein
a transition between the transmitter (11) and the surface of the rotor blade (30) and between the receiver (12) and the surface of the rotor blade (30) is of a sharp-edged configuration in each case.

10. A rotor blade (30) according to any one of the preceding claims, wherein
the transmitter (11) and the receiver (12) protrude in pin form from the surface of the rotor blade.

11. A wind power installation comprising at least one rotor blade according to any one of claims 1 to 10.

## Revendications

1. Pale de rotor (30) pour éolienne, comprenant :
un nez de pale de rotor (31),
un dispositif de détection de dépôt (1, 11, 12, 13) disposé dans la zone du nez de pale de rotor (31) et comprenant un émetteur (11) pour l'émission sans fil de signaux le long d'un trajet de transmission (13) et un récepteur (12) destiné à recevoir les signaux transmis sans fil le long du trajet de transmission (13),
les dépôts sur la surface de la pale de rotor (30) situés dans la zone directe du trajet de transmission (13) du signal transmis sans fil étant détectés au moyen des signaux transmis le long du trajet de transmission (13),
le trajet de transmission (13) s'étendant entre l'émetteur (11) et le récepteur (12) sensiblement parallèlement au nez de pale de rotor (31).

2. Pale de rotor (30) selon la revendication 1, comprenant
un dispositif de comparaison (3) destiné à comparer les signaux émis par l'émetteur (11) et reçus par le récepteur (12) afin de détecter des variations dans les signaux reçus.

3. Pale de rotor (30) selon la revendication 1, comprenant
un raccordement destiné à coupler un dispositif de comparaison externe au dispositif de détection de dépôt (1, 11, 12, 13), les signaux émis par l'émetteur (11) et reçus par le récepteur (12) étant comparés dans le dispositif de comparaison afin de détecter des variations dans les signaux reçus.

4. Pale de rotor (30) selon la revendication 1, 2 ou 3, le dispositif de détection de dépôt étant conçu pour détecter les dépôts en continu ou par intervalles de temps prédéterminés.

5. Pale de rotor (30) selon la revendication 2, 3 ou 4,
le dispositif de comparaison (3) comprenant une mémoire destinée à stocker les variations détectées afin d'établir une base de données.

6. Pale de rotor (30) selon l'une quelconque des revendications précédentes,
le dispositif de détection de dépôt(1, 11, 12, 13) représentant un dispositif capteur optique.

7. Pale de rotor (30) selon la revendication 6,
l'émetteur (11) comprenant une lentille d'éjection (11a) et le récepteur (12) une lentille d'injection (12a).

8. Pale de rotor (30) selon l'une quelconque des revendications précédentes,
l'émetteur (11) et le récepteur (12) étant reliés respectivement par des guides d'ondes optiques (11 b, 12b) au dispositif de comparaison (3).

9. Pale de rotor (30) selon l'une quelconque des revendications précédentes,
une transition respectivement entre l'émetteur (11) et la surface de la pale de rotor (30) de même qu'entre le récepteur (12) et la surface de la pale de rotor (30) s'effectuant aux arêtes vives.

10. Pale de rotor (30) selon l'une quelconque des revendications précédentes,
l'émetteur (11) et le récepteur (12) faisant saillie de la surface de la pale de rotor en formant une broche.

11. Eolienne comprenant au moins une pale de rotor selon l'une quelconque des revendications 1 à 10.
